# EUROPÄISCHE PATENTSCHRIFT

(11) **EP 2 993 348 B1**
(45) Veröffentlichungstag und Bekanntmachung des Hinweises auf die Patenterteilung: **31.05.2017**
(21) Anmeldenummer: 15001727.5
(22) Anmeldetag: 11.06.2015
(51) Int. Cl.: F04C 2/16, F04C 15/00

(54) **SCHRAUBENSPINDELPUMPE MIT DAMPFSPERRE**
SCREW SPINDLE PUMP WITH VAPOUR BARRIER
POMPE À VIS DOTÉE D'UN PARE-VAPEUR

(30) Priorität: 11.08.2014 DE 102014011658
(43) Veröffentlichungstag der Anmeldung: 09.03.2016
(73) Patentinhaber: Jung & Co. Gerätebau GmbH, 25495 Kummerfeld/Pinneberg (DE)
(72) Erfinder: Jung, Hans, 25421 Pinneberg (DE); Christov, Weshen, 32457 Porta Westfalica (DE)
(74) Vertreter: Wetzel, Philipp

(56) Entgegenhaltungen:
- DE-A1-102012 001 700
- DE-A1-102012 005 949
- DE-B4- 10 104 621

## Beschreibung

Die Erfindung betrifft eine zweispindelige Schraubenspindelpumpe mit einem Pumpengehäuse für ein zu förderndes Medium, insbesondere ein Lebensmittel, das einen Pumpenabschnitt, wenigstens einen Lagerabschnitt und wenigstens einen Getriebeabschnitt aufweist, wobei der wenigstens eine Lagerabschnitt und der Pumpenabschnitt getrennt voneinander ausgeführt sind, wobei der Pumpenabschnitt ein Produktraum ist, durch den das Medium gefördert wird, mit einem Fördergehäuseteil als Bestandteil des Pumpenabschnitts, in dem zwei auf Wellen angeordnete Förderschrauben vorgesehen sind, mit wenigstens einem Zuführabschnitt und mit wenigstens einem Abförderabschnitt als Bestandteile des Pumpenabschnitts, bevorzugt jeweils mit einem Anschlussflansch, wobei der Produktraum wenigstens eine Trennfuge mit einer Verbindung zur Umgebungsatmosphäre aufweist, die mit einer Dampfsperre versehen ist, die eine Nut als Dampfkanal aufweist.

Ein solcher Pumpenaufbau ist bekannt aus der DE 10 2012 001 700 A1. Diese Pumpen zeichnen sich insbesondere durch einen produktschonenden Betrieb und eine damit einhergehende Verschleißarmut aus. Die offenbarte Schraubenspindelpumpe ist zwischen Pumpenabschnitt und Lagerabschnitt mit Gleitringdichtungen versehen. Dadurch wird insbesondere eine reversible Förderung möglich. Hierdurch liegt die Gleitringdichtung am Eintritt oder am Austritt der Pumpe. Die Förderschrauben befinden sich im Pumpengehäuse innerhalb des Pumpenabschnitts. Sie werden umschlossen vom Fördergehäuseteil und bilden zusammen Förderkammern. Die Förderschrauben sind auf den Wellen angebracht, die in einem Getriebeabschnitt enden. Auf den Wellen sind im Getriebeabschnitt Zahnräder angeordnet, mittels derer die Wellen drehgekoppelt sind.

Die Förderschrauben sind so angeordnet, dass sie sich im Eingriff befinden. Sie weisen jeweils eine korrespondierende Steigung und eine korrespondierende Breite der Schraubengänge auf. Zwischen den Schraubengängen befinden sich die Förderkammern. Während der Rotation der Wellen und damit der Förderschrauben wird das zu verpumpende Medium in diesen Förderkammern vom Eintritt zum Austritt verschoben. Alternativ kann es sich aber auch um eine Pumpe wie beispielhaft in DE 10 2012 005 949 A1 offenbart handeln, bei der die Schrauben zweiseitig gelagert sind.

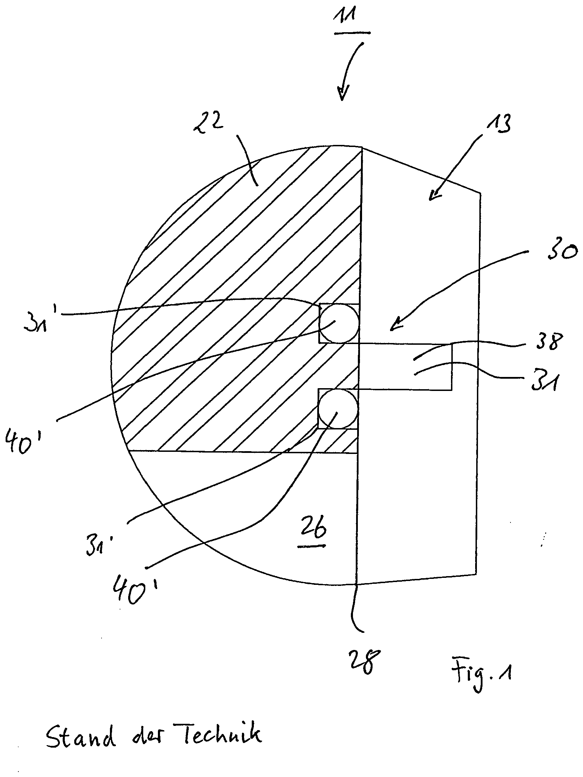

Eine Dampfsperre in solchen Pumpen ist als Stand der Technik in Fig. 1 offenbart. Ziel solcher Dampfsperren ist es, den Eintritt von Bakterien von der Umgebungsatmosphäre in den Produktraum der Pumpe zu verhindern, indem heißer Dampf in die Dampfsperre geleitet wird, um die Bakterien abzutöten.

In Fig. 1 ist eine Dampfsperre 30 in einer Trennfuge in einem Pumpengehäuse 11 dargestellt, die in einem ersten Bauteil 13 eine Nut 31 als Dampfkanal 38 aufweist, und in einem zweiten Bauteil 22, die zusammengefügt die Trennfuge 28 bilden, zwei Nuten 31' zur Abdichtung des Dampfkanals vorgesehen sind, in die jeweils eine Dichtung 40' in Form eines Dichtrings eingesetzt ist. Eine solche Dampfsperre ist verbesserungswürdig, da es kostenintensiv und häufig schwierig ist, die drei umlaufenden Nuten insbesondere aufgrund ihrer Größe entsprechend zu fertigen.

Aufgabe der Erfindung ist es, eine einfacher und kostengünstiger zu fertigende Dampfsperre bereitzustellen.

Gelöst wird die Aufgabe dadurch, dass in der Nut wenigstens eine Dichtung vorgesehen ist, die den Dampfkanal zum Produktraum und zur Umgebungsatmosphäre abdichtet.

Hierdurch ist nur eine Nut erforderlich und diese kann größer ausgeführt werden, so dass sie einfacher herzustellen ist.

Eine weitere Lehre der Erfindung sieht vor, dass die Dichtung einen ersten Wandabschnitt und einen zweiten Wandabschnitt zur Abdichtung des Dampfkanals aufweist, bevorzugt parallel und/oder konzentrisch zueinander angeordnet, die mit einem Verbindungsabschnitt verbunden sind. Dieser Aufbau stellt eine besonders einfach zu realisierende und effiziente Ausführungsform der zu verwendenden Dichtung dar.

Eine weitere Lehre der Erfindung sieht vor, dass der Verbindungsabschnitt Öffnungen für einen Dampfdurchtritt aufweist. Hierdurch wird eine besonders gute Dampfverteilung in der Dampfsperre erreicht.

Eine weitere Lehre der Erfindung sieht vor, dass durch die in die Nut eingesetzte Dichtung zwei Dampfkanäle bestehen. Hierdurch wird eine besonders effiziente Dampfverteilung gewährleistet mit einer entsprechend guten Wirkung gegen eindringende Keime.

Eine weitere Lehre der Erfindung sieht vor, dass die Dichtung wenigstens abschnittsweise aus einem Elastomer besteht.

Eine weitere Lehre der Erfindung sieht vor, dass wenigstens eine Trennfuge zwischen Fördergehäuseteil, Zuführabschnitt und/oder Abförderabschnitt besteht. Eine weitere Lehre der Erfindung sieht vor, dass der Dampfkanal wenigstens einen Eintritt, bevorzugt als Dampfeintritt ausgeführt und/oder an der Oberseite des Pumpgehäuses angeordnet, und wenigstens einen Austritt, bevorzugt als Kondensatablass ausgeführt und/oder an der Unterseite des Pumpengehäuses angeordnet, aufweist. Eine weitere Lehre der Erfindung sieht vor, dass es sich um eine Schraubenspindelpumpe in einflutiger Bauweise mit einem Lagerabschnitt handelt, wobei bevorzugt die Wellen im Lagerabschnitt gelagert sind (Außenlagerung) und sich in den Getriebeabschnitt erstrecken oder um eine Schraubenspindelpumpe in zweiflutiger Bauweise mit zwei Lagerabschnitten handelt, wobei bevorzugt die Wellen im einem ersten Lagerabschnitt gelagert sind (Außenlagerung) und in einem zweiten Lagerabschnitt gelagert sind, der als Außenlager oder als Innenlager im Pumpenabschnitt ausgeführt ist.

Gezeigt ist ein Dichtungsring, bevorzugt aus einem Elastomer, mit einem ersten Wandabschnitt und einem zweiten Wandabschnitt, bevorzugt parallel und/oder konzentrisch zueinander angeordnet, die mit wenigstens einem Verbindungsabschnitt verbunden sind, so dass wenigstens zwei u-förmige Raumbegrenzungen vorliegen, die wenigstens zwei Räume dreiseitig umschließen, wobei der wenigstens eine Verbindungsabschnitt wenigstens eine Öffnung zur Verbindung der wenigstens zwei Räume aufweist, wobei die wenigstens eine Öffnung einen Fluiddurchtritt ermöglicht, und die wenigstens zwei Räume einen Dampfkanal darstellen.

Nachfolgend wird die Erfindung anhand eines Ausführungsbeispiels in Verbindung mit einer Zeichnung näher erläutert. Dabei zeigen:
- Fig. 1: eine Schnittansicht einer Dampfsperre einer Pumpe im Stand der Technik,
- Fig. 2: eine räumliche Ansicht einer erfindungsgemäßen Pumpe,
- Fig. 3: eine Schnittansicht zu Fig. 2,
- Fig. 4a, 4b: eine Seitenansicht und eine räumliche Ansicht eines Abschnitts einer Pumpe mit einer Nut einer Dampfsperre zu Fig. 2,
- Fig. 5a, 5b: eine Seitenansicht und eine räumliche Ansicht eines Abschnitts einer Pumpe mit einer Nut einer Dampfsperre mit eingesetzter Dichtung zu Fig. 2,
- Fig. 6a, 6b: eine Seitenansicht und eine räumliche Ansicht einer Dichtung, und
- Fig. 7: eine Schnittansicht einer Dampfsperre.

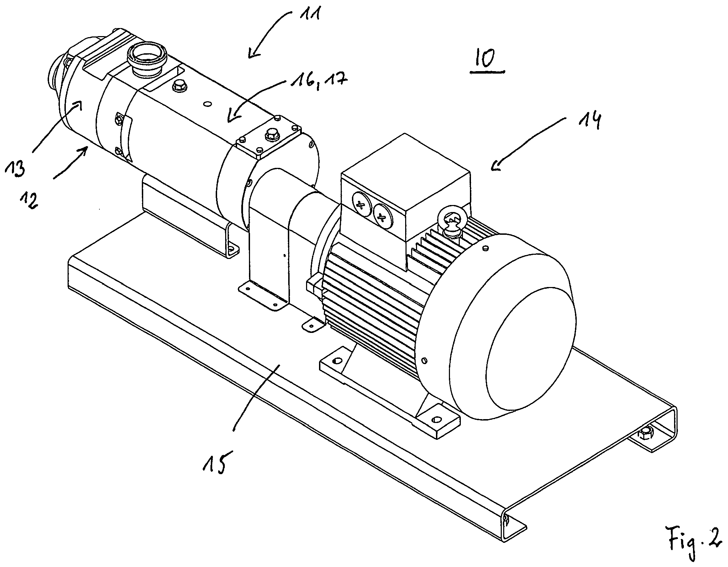

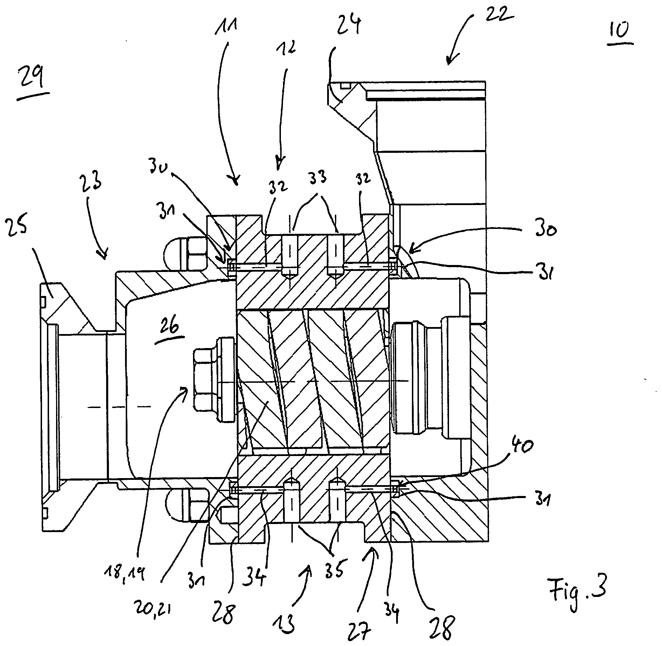

Fig. 2 zeigt eine Schraubenspindelpumpe 10 mit einem Pumpengehäuse 11 und einem Antrieb 14, die auf einer Bodenplatte 15 angeordnet sind. Das Pumpengehäuse 11 weist einen Pumpenabschnitt 12 auf, der in Fig. 3 in Schnittansicht dargestellt ist. Der Pumpenabschnitt 12 zeigt dabei ein Fördergehäuseteil 13, in dem zwei auf Wellen 18, 19 angeordnete Förderschrauben 20, 21 angeordnet sind, die sich im Eingriff befinden. Befestigt an dem Fördergehäuseteil 13 ist ein Zuführabschnitt 22 und ein Abförderabschnitt 23, die jeweils mit einem Anschlussflansch 24, 25 versehen sind, über die die Pumpe 10 in den Kreislauf des zu fördernden Mediums angeschlossen und integriert wird. Der Zuführabschnitt 22 selber weist eine Verbindung zum Lagerabschnitt 16 und Getriebeabschnitt 17 auf, der hier nicht dargestellt ist.

Der Innenraum 26 ist gleichzeitig der Produktraum, in dem das zu fördernde Medium bewegt wird. Der Produktraum 26 wird dabei vom Gehäuse 27 des Pumpenabschnitts 12 umgeben, das aus dem Zuführabschnitt 22, dem Fördergehäuseteil 13 und dem Abförderabschnitt 23 gebildet ist. Zwischen dem Zuführabschnitt 22 und dem Fördergehäuseteil 13 sowie zwischen dem Fördergehäuseteil 13 und dem Abförderabschnitt 23 ist jeweils eine Trennfuge 28 vorhanden, die den Produktraum 26 mit der Umgebungsatmosphäre 29 verbindet.

In den Trennfugen 28 ist jeweils eine Dampfsperre 30 angeordnet. Die Dampfsperre 30 umfasst eine Nut 31, die jeweils in dieser Ausführungsform im Zuführabschnitt 22 und im Abförderabschnitt 23 angeordnet ist. Im Fördergehäuseteil 13 sind Versorgungskanäle 32 vorgesehen, die mit einer Einlassbohrung 33 verbunden sind, durch die Dampf über die Versorgungskanäle 32 in die Nuten 31 eingebracht wird.

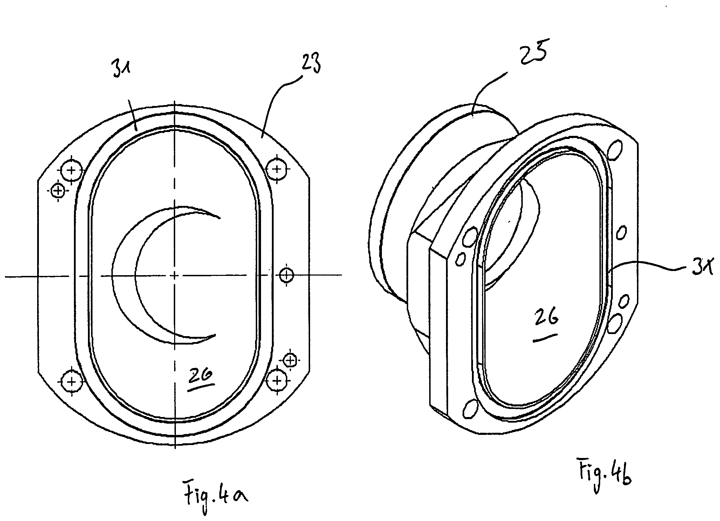

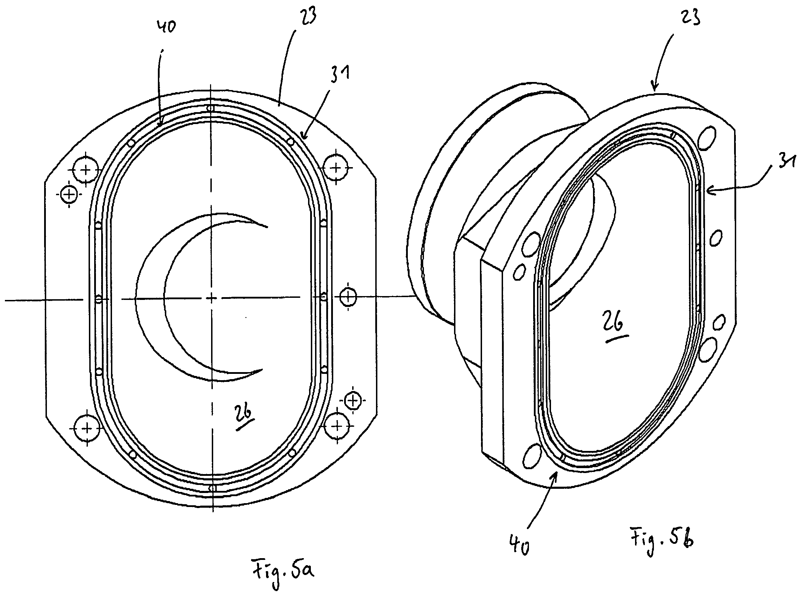

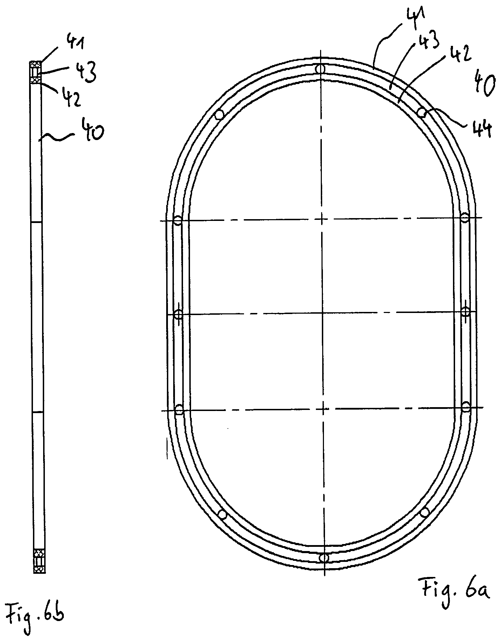

Fig. 4a und 4b zeigen die im Abförderabschnitt 23 angeordnete Nut 31. Diese ist ringförmig umlaufend vorgesehen. In der Nut 31, wie in Fig. 5a und 5b dargestellt, ist eine Dichtung 40 angeordnet. Die Dichtung 40 ist in den Fig. 6a und 6b dargestellt.

An der Unterseite der Nut 31 sind Ablassbohrungen 35 vorgesehen, die über Ablasskanäle 34 mit der Nut 31 verbunden sind. Über die Ablasskanäle 34 und die Ablassbohrungen 35 tritt entweder überschüssiger Dampf aus der Dampfsperre 30 aus oder Kondensat, das sich durch die Abkühlung des Dampfes in der Nut 31 gebildet hat, fließt ab.

Die Dichtung 40 weist einen ersten Wandabschnitt 41 und einen zweiten parallel dazu, beziehungsweise in den Kurvenbereichen konzentrisch dazu, angeordneten Wandabschnitt 42 auf. Die beiden Wandabschnitte 41, 42 sind über einen Verbindungssteg 43, der hier rechtwinklig auf den Wandabschnitten 41, 42 angeordnet ist, verbunden. In dem Verbindungssteg 43 sind Bohrungen 44 vorgesehen, durch die Dampf oder Kondensat hindurchtreten kann.

Der Wandabschnitt 41 wird durch den Verbindungssteg 43 in einen Wandabschnittsteil 41 a und einen Wandabschnittsteil 41 b aufgeteilt. Gleiches gilt für den Wandabschnitt 42, der durch den Verbindungssteg 43 in einen Wandabschnittsteil 42a und einen Wandabschnittsteil 42b aufgeteilt wird.

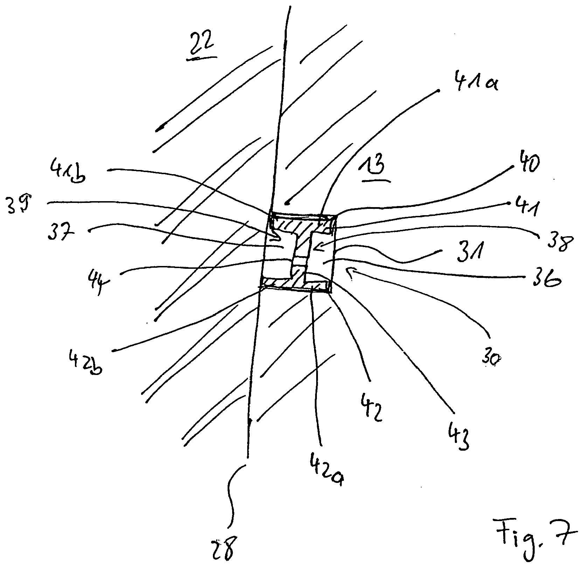

Wandabschnittsteil 41 a, der Verbindungssteg 43 und Wandabschnittsteil 42a bilden eine u-förmige Wand, die einen Raum 36 umgibt. Gleiches gilt für den Wandabschnittsteil 41 b, der Verbindungssteg 43 und dem Wandabschnittsteil 42b, die eine u-förmige Wandung bilden und einen Raum 37 umfassen. Bei dem Raum 36 und dem Raum 37 handelt es sich jeweils um einen Dampfkanal 38, 39. Es hat sich gezeigt, dass das Vorsehen dieser zwei Dampfkanäle 38, 39 eine besonders gute Wirkung für die Dampfsperre 30 bereitstellt. Die Anordnung der Dichtung 40 in der Nut 31 ist insbesondere in Fig. 7 dargestellt.

Die Wandabschnitte 41, 42 und der Verbindungssteg 43 sind aus einem Elastomer gebildet. Die Wandabschnitte 41, 42 dichten die Trennfuge 28 gegenüber den Dampfkanälen 38, 39 ab.

## Patentansprüche

1. Zweispindelige Schraubenspindelpumpe mit einem Pumpengehäuse (11) für ein zu förderndes Medium das einen Pumpenabschnitt (12), wenigstens einen Lagerabschnitt (16) und wenigstens einen Getriebeabschnitt (17) aufweist, wobei der wenigstens eine Lagerabschnitt (16) und der Pumpenabschnitt (12) getrennt voneinander ausgeführt sind, wobei der Pumpenabschnitt ein Produktraum (26) ist, durch den das Medium gefördert wird, mit einem Fördergehäuseteil (13) als Bestandteil des Pumpenabschnitts (12), in dem zwei auf Wellen (18, 19) angeordnete Förderschrauben (20, 21) vorgesehen sind, mit wenigstens einem Zuführabschnitt (22) und mit wenigstens einem Abförderabschnitt (23) als Bestandteile des Pumpenabschnitts (12), wobei der Produktraum (26) wenigstens eine Trennfuge (28) mit einer Verbindung zur Umgebungsatmosphäre (29) aufweist, die mit einer Dampfsperre (30) versehen ist, **dadurch gekennzeichnet, dass** die Dampfsperre (30) eine Nut (31) als Dampfkanal (38) aufweist, und in der Nut (31) wenigstens eine Dichtung (40) vorgesehen ist, die den Dampfkanal (38) zum Produktraum (26) und zur Umgebungsatmosphäre (29) abdichtet.

2. Schraubenspindelpumpe nach Anspruch 1, **dadurch gekennzeichnet, dass** die Dichtung (40) einen ersten Wandabschnitt (41) und einen zweiten Wandabschnitt (42) zur Abdichtung des Dampfkanals (38) aufweist die mit einem Verbindungsabschnitt (43) verbunden sind.

3. Schraubenspindelpumpe nach Anspruch 2, **dadurch gekennzeichnet, dass** der Verbindungsabschnitt (43) Öffnungen (44) für einen Dampfdurchtritt aufweist.

4. Schraubenspindelpumpe nach Anspruch 2 oder 3, **dadurch gekennzeichnet, dass** durch die in die Nut (31) eingesetzte Dichtung (40) zwei Dampfkanäle (38, 39) bestehen.

5. Schraubenspindelpumpe nach einem der Ansprüche 1 bis 4, **dadurch gekennzeichnet, dass** die wenigstens eine Trennfuge (28) zwischen Fördergehäuseteil (13), Zuführabschnitt (22) und/oder Abförderabschnitt (23) besteht,

6. Schraubenspindelpumpe nach einem der Ansprüche 1 bis 5, **dadurch gekennzeichnet, dass** der Dampfkanal (31) wenigstens einen Eintritt (32,33) und wenigstens einen Austritt (34, 35) aufweist.

7. Schraubenspindelpumpe nach einem der Ansprüche 1 bis 6, **dadurch gekennzeichnet, dass** es sich um eine Schraubenspindelpumpe in einflutiger Bauweise mit einem Lagerabschnitt (16), oder um eine Schraubenspindelpumpe in zweiflutiger Bauweise mit zwei Lagerabschnitten handelt.

8. Schraubenspindelpumpe nach einem der Ansprüche 1 bis 7, **dadurch gekennzeichnet, dass** die Dichtung (40) wenigstens abschnittsweise aus einem Elastomer besteht.

9. Schraubenspindelpumpe nach einem der Ansprüche 1 bis 8, **dadurch gekennzeichnet, dass** das zu fördernde Medium ein Lebensmittel ist.

10. Schraubenspindelpumpe nach einem der Ansprüche 1 bis 9, **dadurch gekennzeichnet, dass** der Abförderabschnitt (23) mit einem Anschlussflansch (24, 25) versehen ist.

11. Schraubenspindelpumpe nach einem der Ansprüche 2 bis 10, **dadurch gekennzeichnet, dass** der ersten Wandabschnitt (41) und der zweiten Wandabschnitt (42) der Dichtung (40) parallel und/oder konzentrisch zueinander angeordnet sind.

12. Schraubenspindelpumpe nach einem der Ansprüche 6 bis 11, **dadurch gekennzeichnet, dass** der Eintritt (32, 33) als Dampfeintritt ausgeführt und/oder an der Oberseite des Pumpgehäuses (11) angeordnet ist, und der Austritt (34, 35) als Kondensatablass ausgeführt und/oder an der Unterseite des Pumpgehäuses (11) angeordnet ist.

13. Schraubenspindelpumpe nach einem der Ansprüche 7 bis 12, **dadurch gekennzeichnet, dass** die Wellen (18, 19) bei einer Schraubenspindelpumpe in einflutiger Bauweise im Lagerabschnitt (16) gelagert sind (Außenlagerung) und sich in den Getriebeabschnitt (17) erstrecken, oder dass die Wellen bei einer Schraubenspindelpumpe in zweiflutiger Bauweise im einem ersten Lagerabschnitt gelagert sind (Außenlagerung) und in einem zweiten Lagerabschnitt gelagert sind, der als Außenlager oder als Innenlager im Pumpenabschnitt ausgeführt ist.

## Claims

1. Dual-spindle screw pump having a pump housing (11) for a medium to be conveyed, which has a pump section (12), at least one bearing section (16) and at least one gear section (17), wherein the at least one bearing section (16) and the pump section (12) are constructed separately from one another, wherein the pump section is a product chamber (26) through which the medium is conveyed, having a conveyor housing part (13) as a constituent part of the pump section (12) in which two conveying screws (20, 21) that are arranged on shafts (18, 19) are provided, having at least one feed section (22) and at least one removal section (23) as constituent parts of the pump section (12), wherein the product chamber (26) has at least one parting line (28) having a connection to the surrounding atmosphere (29), which is provided with a vapor barrier (30), **characterized in that** the vapor barrier (30) has a groove (31) as vapor channel (38) and there is provided in the groove (31) at least one seal (40) which seals the vapor channel (38) off from the product chamber (26) and from the surrounding atmosphere (29).

2. Screw pump according to Claim 1, **characterized in that** the seal (40) has a first wall portion (41) and a second wall portion (42) for sealing off the vapor channel (38), which are connected by a connection portion (43).

3. Screw pump according to Claim 2, **characterized in that** the connection portion (43) has openings (44) for vapor to pass through.

4. Screw pump according to Claim 2 or 3, **characterized in that** there are two vapor channels (38, 39) through the seal (40) that is inserted in the groove (31).

5. Screw pump according to one of Claims 1 to 4, **characterized in that** there is at least one parting line (28) between the conveyor housing part (13), the feed section (22) and/or the removal section (23).

6. Screw pump according to one of Claims 1 to 5, **characterized in that** the vapor channel (31) has at least one inlet (32, 33) and at least one outlet (34, 35).

7. Screw pump according to one of Claims 1 to 6, **characterized in that** it is a screw pump of single-flow construction having a bearing section (16), or it is a screw pump of dual-flow construction having two bearing sections.

8. Screw pump according to one of Claims 1 to 7, **characterized in that** the seal (40) is made from an elastomer, at least in certain portions.

9. Screw pump according to one of Claims 1 to 8, **characterized in that** the medium to be conveyed is a foodstuff.

10. Screw pump according to one of Claims 1 to 9, **characterized in that** the removal section (23) is provided with a connection flange (24, 25).

11. Screw pump according to one of Claims 2 to 10, **characterized in that** the first wall portion (41) and the second wall portion (42) are arranged parallel to the seal (40) and/or concentric to one another.

12. Screw pump according to one of Claims 6 to 11, **characterized in that** the inlet (32, 33) is in the form of a vapor inlet and/or arranged on the upper side of the pump housing (11), and the outlet (34, 35) is in the form of a condensate drain and/or arranged on the underside of the pump housing (11).

13. Screw pump according to one of Claims 7 to 12, **characterized in that** the shafts (18, 19) in a screw pump of single-flow construction are borne in the bearing section (16) (outside bearing) and extend into the gear section (17), or **in that** the shafts in a screw pump of dual-flow construction are borne in a first bearing section (outside bearing) and borne in a second bearing section that takes the form of an outer bearing or inner bearing in the pump section.

## Revendications

1. Pompe à vis à deux vis, comprenant un boîtier de pompe (11) pour un milieu à refouler, qui présente une portion de pompe (12), au moins une portion de palier (16) et au moins une portion de transmission (17), l'au moins une portion de palier (16) et la portion de pompe (12) étant réalisées de manière séparée l'une de l'autre, la portion de pompe étant un espace de produit (26) à travers lequel le milieu est refoulé, comprenant une partie de boîtier de refoulement (13) faisant partie de la portion de pompe (12), dans laquelle sont prévues deux vis de refoulement (20, 21) disposées sur des arbres (18, 19), comprenant au moins une portion d'alimentation (22) et au moins une portion d'évacuation (23) faisant partie de la portion de pompe (12), l'espace de produit (26) présentant au moins un joint de séparation (28) avec une liaison avec l'atmosphère environnante (29), qui est pourvu d'un pare-vapeur (30), **caractérisée en ce que**
le pare-vapeur (30) présente une rainure (31) en tant que canal de vapeur (38), et au moins un joint d'étanchéité (40) est prévu dans la rainure (31), lequel étanchéifie le canal de vapeur (38) par rapport à l'espace de produit (26) et par rapport à l'atmosphère environnante (29).

2. Pompe à vis selon la revendication 1, **caractérisée en ce que** le joint d'étanchéité (40) présente une première portion de paroi (41) et une deuxième portion de paroi (42) pour étanchéifier le canal de vapeur (38), lesquelles sont connectées à une portion de liaison (43).

3. Pompe à vis selon la revendication 2, **caractérisée en ce que** la portion de liaison (43) présente des ouvertures (44) pour un passage de vapeur.

4. Pompe à vis selon la revendication 2 ou 3, **caractérisée en ce que** deux canaux de vapeur (38, 39) sont réalisés à travers le joint d'étanchéité (40) inséré dans la rainure (31).

5. Pompe à vis selon l'une quelconque des revendications 1 à 4, **caractérisée en ce que** l'au moins un joint de séparation (28) est réalisé entre la partie de boîtier de refoulement (13), la portion d'alimentation (22) et/ou la portion d'évacuation (23).

6. Pompe à vis selon l'une quelconque des revendications 1 à 5, **caractérisée en ce que** le canal de vapeur (31) présente au moins une entrée (32, 33) et au moins une sortie (34, 35).

7. Pompe à vis selon l'une quelconque des revendications 1 à 6, **caractérisée en ce qu'**il s'agit d'une pompe à vis de construction à une cannelure avec une portion de palier (16), ou d'une pompe à vis de construction à deux cannelures avec deux portions de palier.

8. Pompe à vis selon l'une quelconque des revendications 1 à 7, **caractérisée en ce que** le joint d'étanchéité (40) se compose au moins en partie d'un élastomère.

9. Pompe à vis selon l'une quelconque des revendications 1 à 8, **caractérisée en ce que** le milieu à refouler est un produit alimentaire.

10. Pompe à vis selon l'une quelconque des revendications 1 à 9, **caractérisée en ce que** la portion d'évacuation (23) est pourvue d'une bride de raccordement (24, 25).

11. Pompe à vis selon l'une quelconque des revendications 2 à 10, **caractérisée en ce que** la première portion de paroi (41) et la deuxième portion de paroi (42) du joint d'étanchéité (40) sont disposées parallèlement et/ou concentriquement l'une par rapport à l'autre.

12. Pompe à vis selon l'une quelconque des revendications 6 à 11, **caractérisée en ce que** l'entrée (32, 33) est réalisée sous forme d'entrée de vapeur et/ou est disposée au niveau du côté supérieur du boîtier de pompe (11), et la sortie (34, 35) est réalisée sous forme d'évacuation de condensat et/ou est disposée au niveau du côté inférieur du boîtier de pompe (11).

13. Pompe à vis selon l'une quelconque des revendications 7 à 12, **caractérisée en ce que** les arbres (18, 19), dans le cas d'une pompe à vis de construction à une cannelure, sont supportés dans la portion de palier (16) (support sur palier extérieur) et s'étendent dans la portion de transmission (17), ou **en ce que** les arbres, dans le cas d'une pompe à vis de construction à deux cannelures, sont supportés dans la première portion de palier (support sur palier extérieur) et sont supportés dans une deuxième portion de palier qui est réalisée sous forme de palier extérieur ou sous forme de palier intérieur dans la portion de pompe.
